# EUROPÄISCHE PATENTSCHRIFT

(11) **EP 2 589 849 B1**
(45) Veröffentlichungstag und Bekanntmachung des Hinweises auf die Patenterteilung: **08.01.2014**
(21) Anmeldenummer: 11306411.7
(22) Anmeldetag: 03.11.2011
(51) Int. Cl.: F16L 51/04, H02G 15/34

(54) **Vorrichtung zur Kompensation von Längenänderungen bei Supraleiterkabeln**
Device for compensating for changes in length in superconductor cables
Dispositif de compensation de modifications de longueurs dans des câbles supraconducteurs

(43) Veröffentlichungstag der Anmeldung: 08.05.2013
(73) Patentinhaber: Nexans, 75008 Paris (FR)
(72) Erfinder: Dr. Stemmle, Mark, 30625 Hannover (DE); Dr. Marzahn, Erik, 30853 Langenhagen (DE)
(74) Vertreter: Döring, Roger

(56) Entgegenhaltungen:
- EP-A2- 1 480 231
- EP-A2- 1 617 537

## Beschreibung

Die vorliegende Erfindung betrifft eine Vorrichtung zur Kompensation und/oder Kontrolle der Bewegung eines einen zu kühlenden Kryostaten aufweisenden Kabels bei dessen thermischer Kontraktion bzw. Expansion, sowie ein Verfahren zur Kontrolle der Bewegung des Kryostats bei dessen Kontraktion bzw. Expansion unter Verwendung der Vorrichtung.

Die Vorrichtung ist insbesondere geeignet, die bei Expansion oder Kontraktion eines Kryostats auftretende Bewegung zu kontrollieren und axial den Kryostaten belastende Kräfte zu vermeiden oder aufzunehmen und vermindert vorzugsweise Kräfte, die beim Temperieren des Kryostats zwischen diesem und einer darin angeordneten Kabelseele auftreten.

Der Kryostat weist vorzugsweise zwei konzentrisch angeordnete gewellte Stahlrohre auf, die zwischen sich einen ringförmigen Zwischenraum bilden, der eine Vakuumisolierung aufweist. Die Vorrichtung erlaubt, dass die Enden einer Kabelseele, die längs des Kryostats angeordnet ist, jeweils an den Enden des Kryostats ortsfest fixiert sind.

Die erfindungsgemäße Vorrichtung kann zumindest ein Kabel mit einem zumindest eine Kabelseele enthaltenden Kryostaten aufweisen, optional zwei oder mehr im Wesentlichen parallel angeordnete Kryostaten, die z.B. jeweils eine einphasige oder mehrphasige supraleitende Kabelseele enthalten.

Das erfindungsgemäße Verfahren sieht vor, dass der Kryostat durch Befüllen seines Innenvolumens, das von der Inneren seiner konzentrischen Wandungen aufgespannt wird, mit Kühlmittel von Raumtemperatur auf die Temperatur des Kühlmittels gekühlt wird und optional von der Temperatur des Kühlmittels durch Ablassen des Kühlmittels auf Umgebungstemperatur temperiert wird. Als Kühlmittel ist insbesondere flüssiger Stickstoff, weniger bevorzugt flüssiges Helium, bevorzugt.

### Stand der Technik

Die EP 1617537 beschreibt ein Supraleiterkabel, bei dem die supraleitende Kabelseele ständig mit jeweils einem Normalleiter verbunden ist, der längsverschieblich durch ein Abschlussstück geführt ist.

Die EP 1480231 beschreibt die Erzeugung einer Überlänge der supraleitenden Kabelseele in einem Kryostaten durch Verbinden der Enden der Kabelseele mit dem Kryostaten im aufgewickelten Zustand.

### Aufgabe der Erfindung

Die Aufgabe der Erfindung liegt in der Bereitstellung einer alternativen Vorrichtung oder eines Verfahrens zur Kontrolle der Bewegung des Kryostats bei dessen Temperierung, insbesondere auf die Temperatur des Kühlmittels. Eine bevorzugte Aufgabe liegt in der Bereitstellung einer Vorrichtung, die die beim Einfüllen eines Kühlmittels in den Kryostaten auftretende Bewegung so aufnimmt, dass eine zusätzliche Kompensation einer Relativbewegung zwischen Kabelseele und Kryostat nicht erforderlich ist, sondern die Kabelseele zumindest in Endverschlüssen des Kryostats ortsfest fixiert sein kann.

### Allgemeine Beschreibung der Erfindung

Die Erfindung löst die Aufgabe mit den Merkmalen der Ansprüche, insbesondere mit einer Vorrichtung zur Führung eines Kryostats zur Verwendung für die Kompensation der thermischen Kontraktion, insbesondere eines Kryostats, der längs seines Innenvolumens eine Kabelseele mit einem Supraleiter enthält, die besonders bevorzugt jeweils an den Enden des Kryostats ortsfest fixiert ist, wobei der Kryostat in einem Abschnitt einen bogenförmigen Verlauf aufweist und in diesem Abschnitt mittels Vorrichtung im Wesentlichen ausschließlich senkrecht zu seiner Längsachse beweglich geführt ist. Der Kryostat ist mittels einer Halterung mit der Vorrichtung verbunden.

Bevorzugt weist der Kryostat in seinem Abschnitt mit bogenförmigem Verlauf eine Muffe auf, die an der Halterung festgelegt ist. Wahlweise kann eine Muffe zylindrische Abschnitte der konzentrischen Wandungen des Kryostats bilden, während die angrenzenden Abschnitte des Kryostats ringförmig oder schraubenlinienförmig gewellte Wandungen aufweisen. Vorzugsweise ist die Kabelseele im Bereich der Muffe am Kryostat bzw. an der Muffe festgelegt, so dass die Kabelseele im Bereich der Muffe gegen eine Bewegung längs der Längsachse des Kryostats fixiert ist. Insbesondere bei dieser Ausführungsform wird eine Relativbewegung der Kabelseele innerhalb des Kryostats besonders effektiv minimiert, während die bei der Kontraktion auftretenden Bewegungen des Kryostats durch die Vorrichtung aufgenommen wird.

Die Vorrichtung zeichnet sich durch eine Halterung aus, in der der Kryostat fixiert ist und die Halterung im Wesentlichen ausschließlich senkrecht zur Längsachse des Kryostats beweglich geführt ist, insbesondere in dem Abschnitt des Kryostats mit bogenförmigem Verlauf im Wesentlichen ausschließlich radial zum bogenförmigen Verlauf beweglich geführt ist. In einer bevorzugten Ausführungsform ist der Kryostat mittels der Halterung dadurch im Wesentlichen ausschließlich senkrecht zu seiner Längsachse beweglich geführt, dass die Halterung der Führungseinrichtung beweglich an zumindest einer Schiene, bevorzugt an zwei parallelen Schienen geführt ist, die senkrecht zur Längsachse des Kryostats verlaufen, bzw. im expandierten Zustand des Kryostats, insbesondere wenn der Kryostat frei von Kühlmittel ist, radial zu seinem Abschnitt mit bogenförmigem Verlauf verlaufen.

Alternativ weist die Vorrichtung einen im Wesentlichen ausschließlich in einer zur Längsachse des Kryostats senkrechten Ebene beweglichen Arm auf, der insbesondere ausschließlich linear beweglich ist. Ein solcher Arm kann beispielsweise ein Kniegelenk, ein Scherengitter und/oder eine Parallelverschiebeeinrichtung aufweisen oder daraus bestehen, deren Schwenkachsen bevorzugt parallel zur Längsachse des Kryostats und/oder tangential zum bogenförmigen Verlauf des Kryostats angeordnet sind. Ein solcher Arm ist ortsfest gelagert, z.B. an seinem der Halterung gegenüberliegenden Ende. Das ortsfeste Lager des Arms kann oberhalb, unterhalb, seitlich oder einem Winkel gegen die Lotrechte zum Kryostat angeordnet sein, wobei bevorzugt auch das ortsfeste Lager des Arms eine Schwenkachse parallel zur Längsachse des Kryostats bzw. tangential zum bogenförmigen Verlauf des Kryostats angeordnet ist. Bevorzugt weist die Vorrichtung zumindest zwei parallele Arme auf, deren Schwenkachsen koaxial angeordnet sein können. Alternativ können sich zumindest zwei Arme in parallelen Ebenen von der Halterung erstrecken, z.B. in einem Winkel zueinander angeordnet sein, z.B. V-förmig oder einander gegenüberliegend zur Halterung angeordnet sein.

Die erfindungsgemäße Einrichtung der Vorrichtung zur Führung des Kryostats in dessen bogenförmig verlaufendem Abschnitt im Wesentlichen ausschließlich senkrecht zu seiner Längsachse, bzw. radial zum bogenförmigen Verlauf, bewirkt bei Bewegung des Kryostats durch thermische Kontraktion oder Expansion in seiner Längsachse eine gesteuerte Führung der Bewegung des Kryostats, die einerseits eine Überlänge des Kryostats bei Umgebungstemperatur gegenüber seiner Länge im kontrahierten Zustand nach Einfüllen des Kühlmittels erlaubt und axiale Kräfte, die längs des Kryostats und/oder längs einer darin angeordneten Kabelseele verlaufen, vermindert und/oder aufnimmt. Die Vorrichtung weist zudem den Vorteil auf, mit einem verhältnismäßig einfachen Aufbau eine zuverlässige Reduktion oder Vermeidung von längs des Kryostats bzw. der Kabelseele bei thermischer Kontraktion bzw. Expansion wirkenden Kräften durch die im Wesentlichen ausschließlich senkrecht zur Längsachse des Kryostats bzw. radial zum bogenförmigen Verlauf des Kryostats geführte Verschieblichkeit der Halterung zu bewirken, in der der Kryostat fixiert ist und dort insbesondere gegen axiale Bewegung gesichert ist.

Beim erfindungsgemäßen Verfahren ist der Kryostat, in dem vorzugsweise eine supraleitende Kabelseele enthalten ist, deren Enden gegen Längsverschiebung gesichert mit den Enden des Kryostats verbunden sind, ortsfest an der Halterung der Vorrichtung fixiert, wobei die Halterung im Wesentlichen ausschließlich senkrecht zur Längsachse des Kryostats beweglich geführt ist. Die Halterung ist bevorzugt dadurch im Wesentlichen ausschließlich senkrecht zur Längsachse des Kryostats beweglich geführt, dass sie an senkrecht zur Längsachse des Kryostats angeordneten Schienen verschieblich geführt ist, beispielsweise mit Rädern, deren Drehachsen im Wesentlichen parallel zur Längsachse des Kryostats angeordnet sind. Bei Kontraktion bzw. Expansion des Kryostats entlang dessen Längsachse, die beim Einfüllen von Kühlmittel in das Innenvolumen des Kryostats, bzw. beim Erwärmen des Kryostats von der Temperatur des Kühlmittels auf Umgebungstemperatur auftritt, bewegt sich der an der geführten Halterung fixierte Abschnitt des Kryostats im Wesentlichen ausschließlich senkrecht zu seiner Längsachse, so dass längs des Kryostats wirkende Kräfte reduziert bzw. im Wesentlichen vermieden werden, wobei vorzugsweise längs des Kryostats wirkende Kräfte von der Vorrichtung aufgenommen werden.

Die Verwendung der bevorzugten Vorrichtung, bei der die Halterung mittels Rädern beweglich an im Wesentlichen senkrecht zur Längsachse des Kryostats, bzw. radial zum bogenförmigen Verlauf des Kryostats angeordneten Schienen geführt ist, bewegt sich bei Kontraktion bzw. Expansion des Kryostats die Halterung relativ längs der Schienen. Bei der alternativen Ausführungsform bewegt sich die Halterung im Wesentlichen senkrecht zur Längsachse des Kryostats durch Schwenken der aneinander angelenkten Glieder eines im Wesentlichen ausschließlich senkrecht der Längsachse des Kryostats beglichen Arms, sodass die Halterung z.B. in einer Ebene parallel zur Längsachse des Kryostats verschwenkt oder parallel verschoben wird.

Die Führungseinrichtung ist vorzugsweise zum linearen Führen der Halterung senkrecht zur Längsachse des Kryostats bzw. radial zum bogenförmigen Verlauf des Kryostats eingerichtet, wahlweise zum Führen der Halterung in einer entlang einer horizontal oder vertikal ausgerichteten Linie, oder in einer zur Horizontalen geneigten Linie, beispielsweise von 10 bis 80° zur Horizontalen. In der Ausführungsform, in der die Führungseinrichtung der Vorrichtung Schienen zur Führung der Halterung aufweist, kann die Halterung oberhalb oder unterhalb der Schienen angeordnet sein, wobei auf den Schienen geführte Räder an der Halterung gelagert sind, während die Schienen ortsfest angeordnet sind, oder die Schienen an der Halterung befestigt sind, während die an den Schienen geführten Räder ortsfest angeordnet sind. Entsprechend können die an den Schienen geführten Räder in der Halterung gelagert sein und auf unterhalb der Räder angeordneten Schienen geführt sein, oder an oberhalb angeordneten Schienen hängend geführt sein. Optional können die Schienen konkav oder konvex sein, beispielsweise um eine zur Längsachse des Kryostats parallele Mittelachse gebogen; vorzugsweise verlaufen die Schienen in einer Ebene.

Bevorzugt weist die Führungseinrichtung zwei parallele Schienen auf, an der die Halterung geführt ist.

### Genaue Beschreibung der Erfindung

Die Erfindung wird nun genauer anhand der Figuren beschrieben, die schematisch in
- Figur 1 eine bevorzugte Ausführungsform der Vorrichtung vor Einfüllen von Kühlmittel in das Innenvolumen des Kryostats,
- Figur 2 die Ausführungsform von Figur 1 in dem Zustand mit eingefülltem Kühlmittel,
- Figur 3 eine Ausführungsform mit drei parallel verlaufenden Kryostaten vor Einfüllen eines Kühlmittels,
- Figur 4 die Ausführungsform von Figur 3 nach Einfüllen des Kühlmittels,
- Figur 5 eine Ausführungsform eines Arms zur Führung des Kryostats,
- Figur 6 eine weitere Ausführungsform eines Arms zur Führung des Kryostats und
- Figur 7 eine weitere Ausführungsform eines Arms zur Führung des Kryostats zeigen.

In den Figuren bezeichnen gleiche Bezugsziffern funktionsgleiche Elemente.

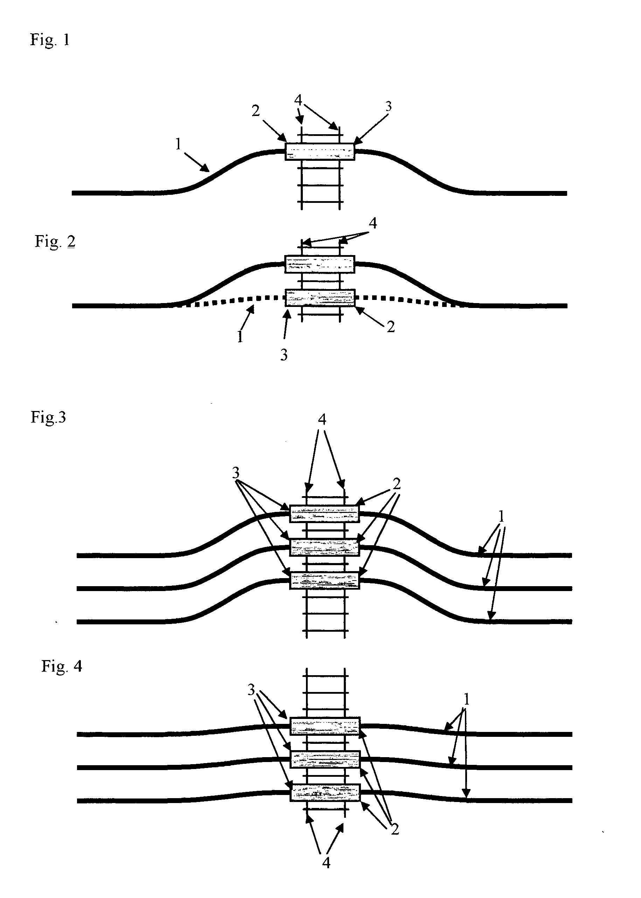

Die Figur 1 zeigt einen Kryostat 1 eines supraleitenden Kabels, der eine supraleitfähige Kabelseele in seinem Innenvolumen enthält. Der Kryostat 1 ist in einem Abschnitt mit bogenförmigem Verlauf angeordnet, in welchem eine Halterung 2 am Kryostat 1 befestigt ist. Entsprechend der bevorzugten Ausführungsform weist der Kryostat 1 im Bereich der Halterung 2 eine Muffe 3 auf, die optional zylindrische Wandungen aufweist, die die konzentrischen gewellten Wandungen des Kryostats 1 fortsetzen. Die Halterung 2 ist auf zwei senkrecht zur Längsachse des Kryostats 1 angeordneten, zueinander parallelen Schienen 4 beweglich geführt.

Die Figur 1 zeigt den Zustand der Vorrichtung, in dem der Kryostat 1 noch nicht mit Kühlmittel versehen ist, sodass der Kryostat 1 noch bei Raumtemperatur vorliegt. Dieser Zustand wird auch als expandierter Zustand bezeichnet, während in Figur 2 der Zustand des Kryostats gezeigt ist, der sich nach Einfüllen von Kühlmittel einstellt. Die Kontraktion des Kryostats 1 längs seiner Längsachse wird durch die Verbindung der Halterung 2 mit dem Kryostat 1 durch die Führung der Halterung 2 längs der Schienen 4 in eine im Wesentlichen senkrecht zur Längsachse des Kryostats 1 gerichtete Bewegung der Halterung 2 umgesetzt, sodass der Kryostat 1 im kontrahierten Zustand die gestrichelt gezeigte Stellung einnimmt. Die Schienen 4 können horizontal oder vertikal angeordnet sein.

Die in Figuren 1 und 2 gezeigte Ausführungsform ist insbesondere für supraleitende Kabel geeignet, bei denen im Kryostat 1 zumindest zwei Phasenleiter angeordnet sind, insbesondere zwei oder drei Phasenleiter, die wahlweise auf in parallel oder mit langem Schlag verseilten, innerhalb des Kryostats 1 angeordneten Kabelseelen enthalten sind, oder, beispielsweise konzentrisch, auf einer gemeinsamen Kabelseele enthalten sind.

Die Figuren 3 und 4 zeigen die Vorrichtung für drei im Wesentlichen parallel verlaufende Kryostaten 1, die z.B. jeweils eine einphasige supraleitende Kabelseele enthalten. Die Kryostaten 1 sind jeweils in einer Halterung 2 festgelegt, insbesondere in einem Abschnitt, in dem sie in einem bogenförmigen Verlauf angeordnet sind und jeweils eine Muffe 3 aufweisen. Jede der Halterungen 2 ist an im Wesentlichen senkrecht zur Längsachse der Kryostaten 1, bzw. radial zum bogenförmigen Verlauf der Kryostaten 1 verlaufenden Schienen 4 beweglich geführt.

Die Figur 3 zeigt den Zustand der Kryostaten 1 vor Einfüllen eines Kühlmittels, sodass die Kryostaten 1 in einem expandierten Zustand vorliegen und einen bogenförmigen Verlauf mit größerem Radius ausbilden, als in dem in Figur 4 gezeigten Zustand, in dem sie nach Einfüllen von Kühlmittel in einem kontrahierten Zustand vorliegen. Figur 4 zeigt, dass die Halterung 2 im Wesentlichen senkrecht zur Längsachse der Kryostaten auf den Schienen 4 verschoben ist.

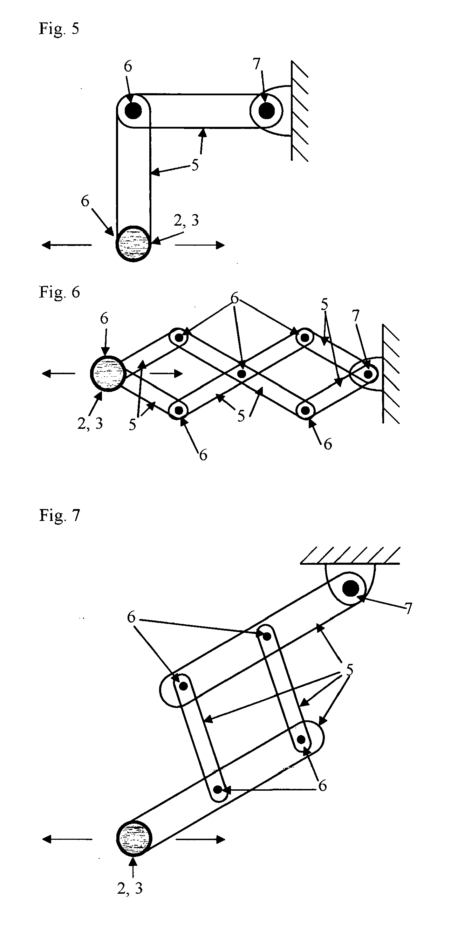

Die Figuren 5 bis 7 zeigen generell Ausführungsformen der Vorrichtung, bei der die Bewegung des Kryostats im Wesentlichen ausschließlich senkrecht zu seiner Längsachse durch einen Arm geführt ist, dessen aneinander angelenkte Armelemente 5 an Schwenkachsen 6 angeordnet sind, die parallel zur Längsachse des Kryostats 1 liegen. Bevorzugt weist der Kryostat auch in dieser Ausführungsform im Bereich der Halterung 2, die am Arm fixiert ist, eine Muffe 3 auf, wie auch mit Bezug auf die bevorzugte Schienenführung des Kryostats 1 beschrieben ist. Ein solcher Arm ist an einem ortsfesten Lager 7 gelagert, das wie dargestellt seitlich zum Kryostat angeordnet ist, d.h. außerhalb der Vertikalen, die durch den Kryostat läuft. Alternativ kann das ortsfeste Lager 7 oberhalb und/oder unterhalb des Kryostats angeordnet sein, d.h. auf der Senkrechten, die durch den Kryostat läuft. Optional erstreckt sich zumindest ein Arm radial zum bogenförmigen Verlauf des Kryostats 1, z.B. vom Außenradius oder vom Innenradius des bogenförmigen Verlaufs, oder die Vorrichtung weist zwei Arme in parallelen Ebenen oder in einer gemeinsamen Ebene auf, die sich V-förmig oder einander gegenüberliegend radial vom bogenförmigen Verlauf erstrecken, d.h. ein Arm vom Außenradius des bogenförmigen Verlaufs und ein Arm vom Innenradius des bogenförmigen Verlaufs. Die Schwenkachse des ortsfesten Lagers 7 liegt vorzugsweise parallel zu den Schwenkachsen 6 der Armelemente 5, bzw. parallel zur Längsachse des Kryostats 1.

Figur 5 zeigt eine einfache Ausführung eines Arms mit Armelementen 5 in Form eines ortsfest angelenkten Kniegelenks, dessen Schwenkachsen 6 alle parallel zur Längsachse der in der Halterung 2 angeordneten Muffe 3 angeordnet sind.

Figur 6 zeigt ein aus Armelementen 5 gebildetes Scherengitter als Arm und Figur 7 zeigt eine aus Armelementen 5 gebildete Parallelogrammführung, die an einem Ende an einem ortsfesten Lager 7 ortsfest angelenkt sind und am gegenüberliegenden Ende die Halterung 2 aufweisen, in der die Muffe 3 befestigt ist.

Die Figuren machen deutlich, dass die erfindungsgemäße Vorrichtung geeignet ist, die durch thermische Kontraktion bzw. Expansion erzeugte Bewegung des Kryostats 1 dadurch zu kontrollieren, dass der Kryostat 1 mittels einer Halterung 2, die durch die Führungseinrichtung der Vorrichtung im Wesentlichen in eine im Wesentlichen ausschließlich senkrecht zur Längsachse des Kryostats 1 gerichtete Bewegung überführt wird und vorzugsweise eine Belastung bzw. Bewegung längs des Kryostats 1 vermieden bzw. aufgenommen wird. Entsprechend der bevorzugten Ausführungsform ist die Führungseinrichtung als zumindest eine Schiene 4 ausgebildet, die im Wesentlichen senkrecht zur Längsachse des Kryostats 1 angeordnet ist, wobei eine Halterung 2 längsverschieblich an der Schiene 4 geführt ist, während der Kryostat 1 an der Halterung 2 fixiert ist, insbesondere gegen eine Verschiebung längs seiner Längsachse an der Halterung 2 gesichert ist, wobei bevorzugt eine im Kryostat angeordnete Kabelseele im Bereich einer Muffe 3, die der Kryostat im Bereich der Halterung 2 aufweist, gegen Längsverschiebung festgelegt ist, insbesondere an der Muffe 3 fixiert ist.

### Bezugszeichenliste:

- 1: Kryostat
- 2: Halterung
- 3: Muffe
- 4: Schiene
- 5: Armelement
- 6: Schwenkachse
- 7: ortsfestes Lager

## Patentansprüche

1. Vorrichtung zur Führung eines Kryostats (1) mit einer in einem Abschnitt mit bogenförmigem Verlauf des Kryostats angeordneten Halterung (2) zur Aufnahme des Kryostats (1), **dadurch gekennzeichnet, dass** die Halterung (2) senkrecht zur Längsachse des Kryostats (1) beweglich geführt ist.

2. Vorrichtung nach Anspruch 1, **dadurch gekennzeichnet, dass** der Kryostat (1) in seinem Innenvolumen eine Kabelseele mit zumindest einem Leiter aus supraleitfähigem Material aufweist und die Kabelseele an den Enden des Kryostats (1) festgelegt ist.

3. Vorrichtung nach einem der voranstehenden Ansprüche, **dadurch gekennzeichnet, dass** der Kryostat (1) in dem Abschnitt, in dem er in der Halterung (2) fixiert ist, eine Muffe (3) aufweist.

4. Vorrichtung nach einem der voranstehenden Ansprüche, **dadurch gekennzeichnet, dass** die Halterung (2) an zumindest einer Schiene (4) geführt ist, die senkrecht zur Längsachse des Kryostats (1) verläuft.

5. Vorrichtung nach einem der voranstehenden Ansprüche, **dadurch gekennzeichnet, dass** die Halterung (2) mittels zumindest eines Rads längs der Schiene (4) beweglich geführt ist.

6. Vorrichtung nach Anspruch 5, **dadurch gekennzeichnet, dass** das Rad an der Halterung (2) gelagert ist und die Schiene (4) ortsfest ist, oder das Rad ortsfest ist und die Schiene (4) an der Halterung (2) fixiert ist.

7. Vorrichtung nach einem der Ansprüche 1 bis 3, **dadurch gekennzeichnet, dass** die Halterung (2) an einem im Wesentlichen ausschließlich in einer senkrecht zur Längsachse des Kryostats (1) angeordneten Ebene beweglichen Arm geführt ist.

8. Vorrichtung nach Anspruch 7, **dadurch gekennzeichnet, dass** die Schwenkachsen (6, 7) des Arms ausschließlich parallel zur Längsachse des Kryostats angeordnet sind.

9. Vorrichtung nach einem der Ansprüche 7 bis 8, **dadurch gekennzeichnet, dass** der Arm eine oder zwei in parallelen Ebenen angeordnete Schwenkeinrichtungen aufweist, die ausgewählt sind aus der Gruppe, die ein Kniegelenk, ein Scherengitter und eine Parallelogrammführung umfasst.

10. Vorrichtung nach einem der Ansprüche 3 bis 9, **dadurch gekennzeichnet, dass** die Kabelseele des Kryostats (1) im Bereich der Muffe (3) festgelegt ist.

11. Verfahren zum Kühlen eines einen Kryostat (1) aufweisenden Supraleiterkabels durch Befüllen des Innenvolumens des Kryostats (1) mit Kühlmittel, wobei der Kryostat (1) abschnittsweise einen bogenförmigen Verlauf aufweist, **dadurch gekennzeichnet, dass** der Kryostat (1) in seinem Abschnitt mit bogenförmigem Verlauf in einer Halterung (2) fixiert ist, die im Wesentlichen ausschließlich senkrecht zur Längsachse des Kryostats (1) beweglich geführt ist, wobei bei thermischer Kontraktion oder Expansion sich die Halterung (2) nur geführt senkrecht zur Längsachse des Kryostats (2) bewegt.

12. Verfahren nach Anspruch 11, **dadurch gekennzeichnet, dass** die Halterung (2) sich entlang zumindest einer Schiene (4) bewegt, die senkrecht zur Längsachse des Kryostats (1) angeordnet ist.

13. Verfahren nach Anspruch 11, **dadurch gekennzeichnet, dass** die Halterung (2) entlang eines Gliederarms schwenkt, dessen Schwenkachsen ausschließlich parallel zur Längsachse des Kryostats (1) angeordnet sind.

14. Verfahren nach einem der Ansprüche 11 bis 13, **dadurch gekennzeichnet, dass** die Enden der in dem Kryostat liegenden Kabelseele ortsfest an den Enden des Kryostats (1) festgelegt sind.

15. Verfahren nach Anspruch 14, **dadurch gekennzeichnet, dass** der Kryostat im Bereich der Halterung (2) eine Muffe (3) aufweist, an der die in dem Kryostat (1) liegende Kabelseele festgelegt ist.

## Claims

1. Device for guiding a cryostat (1), comprising a holder (2) for receiving the cryostat (1) that is arranged in a section with an arc-shaped profile of the cryostat, **characterized in that** the holder (2) is movably guided perpendicularly in relation to the longitudinal axis of the cryostat (1).

2. Device according to Claim 1, **characterized in that** the cryostat (1) has in its interior volume a cable core with at least one conductor of superconductive material and the cable core is fixed at the ends of the cryostat (1).

3. Device according to one of the preceding claims, **characterized in that** the cryostat (1) has a sleeve (3) in the section in which it is fixed in the holder (2).

4. Device according to one of the preceding claims, **characterized in that** the holder (2) is guided on at least one rail (4), which runs perpendicularly in relation to the longitudinal axis of the cryostat (1).

5. Device according to one of the preceding claims, **characterized in that** the holder (2) is movably guided along the rail (4) by means of a wheel.

6. Device according to Claim 5, **characterized in that** the wheel is mounted on the holder (2) and the rail (4) is fixed in place, or the wheel is fixed in place and the rail (4) is fixed on the holder (2).

7. Device according to one of Claims 1 to 3, **characterized in that** the holder (2) is guided on an arm that is movable substantially exclusively in a plane arranged perpendicularly in relation to the longitudinal axis of the cryostat (1).

8. Device according to Claim 7, **characterized in that** the pivoting axes (6,7) of the arm are arranged exclusively parallel to the longitudinal axis of the cryostat.

9. Device according to either of Claims 7 and 8, **characterized in that** the arm has one or two pivoting mechanisms arranged in parallel planes, which are selected from the group comprising a toggle joint, a lattice grille and a parallelogram linkage.

10. Device according to one of Claims 3 to 9, **characterized in that** the cable core of the cryostat (1) is fixed in the region of the sleeve (3).

11. Method for cooling a superconductor cable having a cryostat (1), by filling the interior volume of the cryostat (1) with coolant, the cryostat (1) having an arc-shaped profile in certain sections, **characterized in that**, in its section with an arc-shaped profile, the cryostat (1) is fixed in a holder (2), which is movably guided substantially exclusively perpendicularly in relation to the longitudinal axis of the cryostat (1), the holder (2) only moving in a guided manner perpendicularly in relation to the longitudinal axis of the cryostat (1) when there is thermal contraction or expansion.

12. Method according to Claim 11, **characterized in that** the holder (2) moves along at least one rail (4) which is arranged perpendicularly in relation to the longitudinal axis of the cryostat (1).

13. Method according to Claim 11, **characterized in that** the holder (2) pivots along an articulated arm, the pivoting axes of which are arranged exclusively parallel to the longitudinal axis of the cryostat (1).

14. Method according to one of Claims 11 to 13, **characterized in that** the ends of the cable core lying in the cryostat are fixed in place at the ends of the cryostat (1).

15. Method according to Claim 14, **characterized in that** the cryostat has in the region of the holder (2) a sleeve (3), on which the cable core lying in the cryostat (1) is fixed.

## Revendications

1. Dispositif de guidage d'un cryostat (1) avec un support (2) disposé dans une portion d'allure courbe du cryostat pour recevoir le cryostat (1), **caractérisé en ce que** le support (2) est guidé de manière déplaçable perpendiculairement à l'axe longitudinal du cryostat (1).

2. Dispositif selon la revendication 1, **caractérisé en ce que** le cryostat (1) présente dans son volume intérieur une âme de câble munie d'au moins un conducteur en matériau supraconducteur et l'âme de câble est fixée aux extrémités du cryostat (1).

3. Dispositif selon l'une quelconque des revendications précédentes, **caractérisé en ce que** le cryostat (1) présente un manchon (3) dans la portion dans laquelle il est fixé dans le support (2).

4. Dispositif selon l'une quelconque des revendications précédentes, **caractérisé en ce que** le support (2) est guidé sur au moins un rail (4) qui s'étend perpendiculairement à l'axe longitudinal du cryostat (1).

5. Dispositif selon l'une quelconque des revendications précédentes, **caractérisé en ce que** le support (2) est guidé de manière déplaçable au moyen d'au moins une roue le long du rail (4).

6. Dispositif selon la revendication 5, **caractérisé en ce que** la roue est montée sur le support (2) et le rail (4) est fixé en position, ou la roue est fixée en position et le rail (4) est fixé au support (2).

7. Dispositif selon l'une quelconque des revendications 1 à 3, **caractérisé en ce que** le support (2) est guidé sur un bras mobile essentiellement exclusivement dans un plan disposé perpendiculairement à l'axe longitudinal du cryostat (1).

8. Dispositif selon la revendication 7, **caractérisé en ce que** les axes de pivotement (6,7) du bras sont disposés exclusivement parallèlement à l'axe longitudinal du cryostat.

9. Dispositif selon l'une quelconque des revendications 7 à 8, **caractérisé en ce que** le bras présente un ou deux dispositifs pivotants disposés dans des plans parallèles, lesquels dispositifs pivotants sont sélectionnés parmi le groupe comprenant une articulation à genouillère, un pantographe et un guidage à parallélogramme.

10. Dispositif selon l'une quelconque des revendications 3 à 9, **caractérisé en ce que** l'âme de câble du cryostat (1) est fixée dans la région du manchon (3).

11. Procédé pour refroidir un câble supraconducteur présentant un cryostat (1) par remplissage du volume intérieur du cryostat (1) avec un milieu de refroidissement, le cryostat (1) présentant en partie une allure courbe, **caractérisé en ce que** le cryostat (1) est fixé dans sa portion d'allure courbe dans un support (2), qui est guidé de manière déplaçable essentiellement exclusivement perpendiculairement à l'axe longitudinal du cryostat (1), le support (2) se déplaçant seulement de manière guidée perpendiculairement à l'axe longitudinal du cryostat (1) lors d'une contraction ou d'une dilatation thermique.

12. Procédé selon la revendication 11, **caractérisé en ce que** le support (2) se déplace le long d'au moins un rail (4) qui est disposé perpendiculairement à l'axe longitudinal du cryostat (1).

13. Procédé selon la revendication 11, **caractérisé en ce que** le support (2) pivote le long d'un bras articulé dont les axes de pivotement sont disposés exclusivement parallèlement à l'axe longitudinal du cryostat (1).

14. Procédé selon l'une quelconque des revendications 11 à 13, **caractérisé en ce que** les extrémités de l'âme de câble située dans le cryostat sont fixées de manière immobilisée aux extrémités du cryostat (1).

15. Procédé selon la revendication 14, **caractérisé en ce que** le cryostat présente un manchon (3) dans la région du support (2), sur lequel manchon est fixée l'âme de câble située dans le cryostat (1).
